# EUROPEAN PATENT SPECIFICATION

(11) **EP 2 745 492 B1**
(45) Date of publication and mention of the grant of the patent: **09.06.2021**
(21) Application number: 11870903.9
(22) Date of filing: 15.08.2011
(51) Int. Cl.: H04L 29/08, H04W 8/18

(54) **RECEIVING NETWORK NODE, WIRELESS TELECOMMUNICATIONS NETWORK AND CORRESPONDING METHODS**
EMPFANGSNETZWERKKNOTEN, DRAHTLOSES KOMMUNIKATIONSNETZ UND ENTSPRECHENDE VERFAHREN
NOEUD DE RÉSEAU DE RÉCEPTION, RÉSEAU DE COMMUNICATION SANS FIL, ET PROCÉDÉS CORRESPONDANTS

(43) Date of publication of application: 25.06.2014
(73) Proprietor: Telefonaktiebolaget LM Ericsson (publ), 164 83 Stockholm (SE)
(72) Inventor: VIKBERG, Jari, SE-153 38 Järna (SE); HEDBERG, Tomas, SE-112 69 Stockholm (SE); ERIKSSON, Hans, SE-192 48 Sollentuna (SE); WESTBERG, Lars, SE-745 96 Enköping (SE)
(74) Representative: Ericsson
(86) International application number: PCT/SE2011/050992
(87) International publication number: WO 2013/025132

(56) References cited:
- WO-A1-2010/115469
- WO-A1-2011/050928
- US-A1- 2009 275 346
- US-A1- 2009 275 346
- US-A1- 2010 135 306
- US-A1- 2011 007 341
- "3rd Generation Partnership Project; Technical Specification Group Services and System Aspects; Transparent end-to-end packet-switched streaming service; Stage 1 (Release 10)", 3GPP STANDARD; 3GPP TS 22.233, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V10.1.0, 20 June 2011 (2011-06-20), pages 1-15, XP050553357, [retrieved on 2011-06-20]
- 3GPP: "3rd Generation Partnership Project; Technical Specification Group Radio Access Network; Evolved Universal Terrestrial Radio Access Network (E-UTRAN); S1 Application Protocol (S1AP) (Release 10)", 3GPP DRAFT; DRAFT_36413-A20, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, 6 June 2011 (2011-06-06), XP050541323, [retrieved on 2011-06-06]

## Description

### TECHNICAL FIELD

The present disclosure relates to a receiving network node, a wireless communications network and to methods therein. In particular, it relates to controlling of caching information for a radio bearer for a user equipment located in a wireless communications network.

### BACKGROUND

Caching of information in mobile networks is a relatively known technology. Caching is based on that a large percentage of Internet traffic is repetitive and that eliminating repeating content all the way from its origin may offer a savings opportunity of capacity in a mobile network, also denoted wireless communications network or mobile system, or in a core network. Therefore, a main principle is that copies of content in the e.g. Internet is moved closer to the mobile users i.e. the User Equipments (UEs), for example in the different parts of the Radio Access Network (RAN), in the Core Network (CN) or just "above" the CN. This procedure is typically referred to as caching or caching of information or content.

Some main benefits that can be achieved with caching in wireless communication networks are:
a Decrease a cost of transport in the wireless communications network. This is achieved "above the cache" as the cached information in principle is only transferred once in the transmission links above the cache.
b Improved Quality of Experience for the end-users e.g. the UEs. This is mainly achieved with lower delays as the cached information can be returned faster to the UEs from the cache, compared to if the information would be retrieved all the way from the original location.
c Provide new services such as content hosting and storage/backup for the operators. The mobile operators can sign agreements with the content providers that are based on that the mobile operator ensures that the content from a specific content provider is delivered in a better, faster and/or even guaranteed way to the UEs in the mobile operator's network.

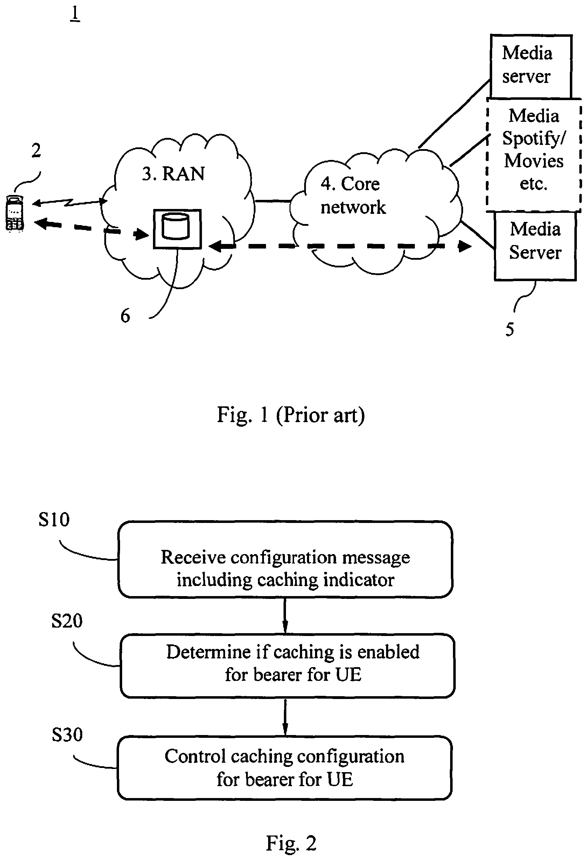

Caching can also be used for the media distribution towards the UEs i.e. instead of retrieving the downloadable media from the media server or from other UEs, the media can be retrieved from the cache. **Fig. 1** shows how media information from one or more media servers **5,** located in the Internet or at service providers, is pushed in to the cache **6** located in a wireless communications network **1.** Typically, the wireless communications network 1, also denoted the mobile network, consists of the RAN **3** and the CN **4** and normally the Internet etc. which is considered as external to the wireless communications network 1. Media information is retrieved or received normally from the Internet or any similar IP network. Then the UE **2** accessing a RAN **3** will receive the media information directly from the cache 6 instead of from the media server. It is also worth mentioning that caching can be used for almost any internet content and that figure 1 is just an illustrating example based on media services. Caching may be done upon statistical analyses of the wireless communications network or upon other terms such as operator specific etc, as mentioned earlier. However, there are some problems with RAN caching and one main problem is that there doesn't exist currently any mechanism for the wireless communications network to control the caching of information or media content on a bearer level for a UE.

Document US 2009/275346 A1 describes a method for providing data buffering at wireless communication nodes. Document WO 2010/115469 A1 describes a method for transferring data in a downlink direction from a transmitting network element to a user equipment. Document WO 2011/ 050928 A1 describes a method of initiating update of EPS bearer context information, by a user equipment (UE), on 3GPP access network nodes, i.e. the pre-establishment of EPS bearers to account for a new PDN connection.

### SUMMARY

It is therefore an object to provide a receiving network node, a wireless communications network and methods therein for controlling caching of information in a wireless communications network.

The invention provides a receiving network node according to claim 8, a wireless communications network according to claim 15 and corresponding methods in accordance with claims 1 and 14.

An advantage achieved by at least one of the above mentioned embodiments is that enhanced and dynamic control of caching of information is provided in the wireless communications network. This enables for example a possibility to allow caching on a radio bearer level and so enables new possibilities for having services that are always or never cached depending on different conditions as long as these services are using specific radio bearers. An example of this is that the core network may dynamically enable or disable caching on a radio bearer depending on for example the type of charging to be applied on the traffic on a specific radio bearer (as in some cases it is best to reuse the existing charging implementation in the core network).

Another advantage is efficient usage of resources in the RAN as not all traffic on all radio bearers need to go through a cache logic that may need a lot of resources as for example different traffic investigation mechanisms, like Deep Packet Inspection (DPI), may be bypassed for traffic on the radio bearers for which caching is to be disabled. Thus, efficient prioritization of information to UEs having different radio access subscriptions may be provided.

Other objectives, advantages and novel features of aspects of the present disclosure will become apparent from the following detailed description of embodiments and aspects.

### BRIEF DESCRIPTION OF THE DRAWINGS

The embodiments are described in more detail with reference to attached drawings illustrating exemplary embodiments and in which:
- Fig. 1: Illustrates a basic scenario of caching in a wireless communications network according to prior art.
- Fig. 2: is a flowchart depicting an example of an embodiment of a method in a receiving network node.
- Fig. 3: is a flowchart depicting further examples of embodiments of methods in a receiving network node.
- Fig. 4: is a schematic block diagram illustrating an example of embodiments of the receiving network node.
- Fig. 5: is a flowchart depicting examples of embodiments of a method in a transmitting network node.
- Fig. 6: is a schematic block diagram illustrating an example of an embodiment of a transmitting network node.
- Fig. 7: is a signalling scheme illustrating an example of implementation of some of the embodiments disclosed in this disclosure and in relation to a dedicated bearer activation procedure in an E-UTRAN/EPC system.
- Fig. 8: is an illustration of a new message applying embodiments disclosed in relation to Fig. 7.
- Fig. 9: is a signalling scheme illustrating an example of implementation of some of the embodiments disclosed in this disclosure and in relation to a PDP context activation procedure for Iu mode.
- Fig. 10: is a signalling scheme illustrating a RAB Assignment procedure in relation to the example of Fig. 9.

### DETAILED DESCRIPTION

**Fig. 2** is a flowchart illustrating a method for controlling caching of information according to this disclosure. The method is for being implemented in a receiving network node in a wireless communications network comprising the receiving network node and a transmitting network node. The receiving network node is capable of serving, on one or more radio bearers, one or more UEs located in the wireless communications network, The wireless communications network may be a Wideband CDMA (WCDMA) network, a LTE network, a GSM/GPRS/EDGE network, a CDMA/CDMA2000 network, WiMAX network or any other similar network. The receiving network node may for example be a Radio Network Controller (RNC), a Base Station Controller (BSC), a Base Station (BS), an eNodeB, a NodeB or a donor BS. The transmitting network node may be a Mobility Management Entity (MME), a Serving General Packet Radio Service Support Node, SGSN or a BS, a eNodeB etc. i.e. same as the alternatives for the receiving network node.

Following above, the method in a receiving network node comprises a step of receiving **S10** a configuration message, from the transmitting network node, including a caching indicator associated with a radio bearer for a UE. This may in turn be based on a request from the UE, e.g. a received request from the UE to create or modify a Packet Data Protocol (PDP) context, for media information or media content or based on a network attachment request sent from the UE to the mobile network. It may also be based on a so called network initiated bearer establishment in which the network decides that a new bearer is to be established towards the UE for a specific service or based on UE traffic or network traffic load. The receiving S10 may comprise receiving a configuration message including a caching indicator associated with an already established radio bearer for the UE and/or a radio bearer to be established for the UE. According to one embodiment, the receiving S10 of a configuration message may comprise receiving a configuration message in association with one of the following: a radio bearer setup request; a radio bearer modify request; a UE context setup request; or a handover request.

According to further embodiments, the configuration message is received from, or via, a base station over an X2 interface, or from a Mobility Management Entity, MME, over an SI-MME interface. The configuration message may also be received from a Serving General Packet Radio Service Support Node, SGSN, over an Iu or an Gb interface.

Continuing with the description of Fig. 2, the method further comprises a step of determining **S20** if caching is enabled, or disabled, for a radio bearer of a UE based on the caching indicator in the received configuration message. Again, the determination here may be based on or initiated by a request from the UE for media content or multimedia information e.g. a web page, a video etc.

After the determining if caching is enabled the receiving node controls **S30** caching of information for the radio bearer for the UE based on a result from the determining (S20).

The controlling S30 of caching configuration for the radio bearer for the UE may comprise enabling caching from an internal storage and/or from an external storage on that radio bearer. The controlling may also comprise not allowing caching at all for the UE on the radio bearer and thus limiting a capacity of the UE. This, i.e. controlling, may further be based on subscription policies, UE capabilities or session information. The controlling may also be operator dependent or traffic load dependent i.e. actual traffic load in served cell.

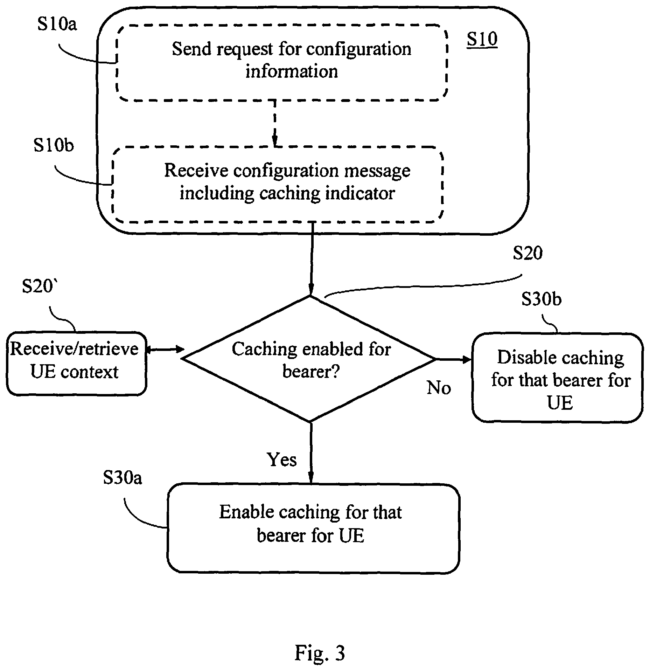

**Fig. 3** is a flowchart depicting further examples of embodiments of methods in a receiving network node and which the above controlling S30 alternatives are disclosed. According to the figure, the receiving S10 of a configuration message is based on a request sent **S10a** to the transmitting network node requesting configuration information and receiving **S10b** the configuration message in response to that request, as seen in Fig. 3. This request may be based on a UE request i.e. UE "Network Attachment" access request or UE request to activate or modify a PDP context (Not shown in figure). The determining S20 may then further be based on other information related to received or retrieved **S20'** UE context. The UE context may comprise information about all the radio bearers for the UE, information about the signalling connection for the UE, information about UE capabilities and information related to UE subscription.

In Fig. 3 the controlling S30 is divided into two steps in which the first is to disable **S30b** caching of information for a certain radio bearer for the UE if the configuration message does not include a caching indicator, or e.g. null, or enabling **S30a** caching for/on that radio bearer for the UE.

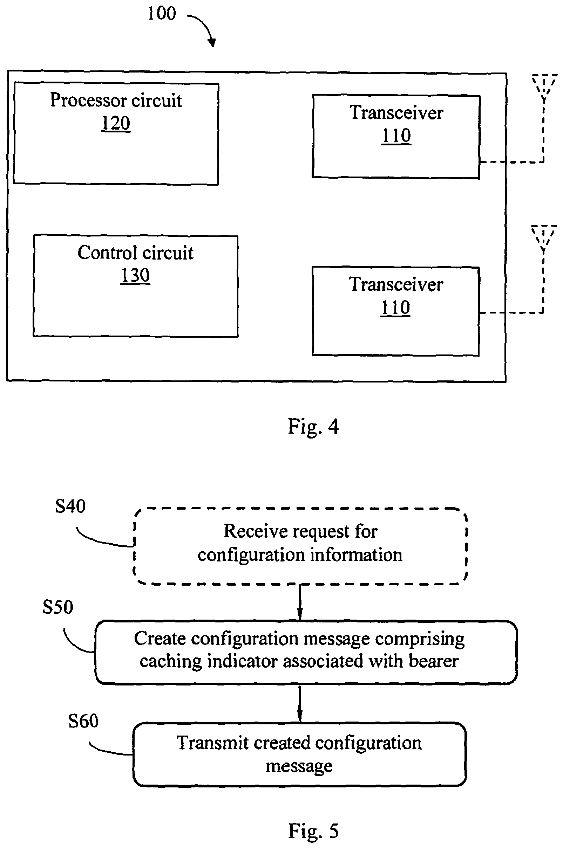

**Fig. 4** is a schematic block diagram illustrating an example of embodiments of the receiving network node mentioned earlier. The receiving network node **100** is for controlling caching of information in a wireless communications network **1** comprising the receiving network node 100 and a transmitting network node **200.** The receiving network node 100 is capable of serving, on one or more radio bearers, one or more UEs 2 (only one illustrated in Fig. 1 for simplicity), located in the wireless communications network 1, the receiving network node 100 comprises one or more transceivers **110,** hereinafter only one transceiver 110 is considered for simplicity, a processor circuit **120** and a control circuit **130.** The transceiver 110 is configured to receive a configuration message, from the transmitting network node 200, the configuration message including a caching indicator associated with a radio bearer for a UE. The transceiver 110 may further be configured to receive a configuration message including a caching indicator associated with an established radio bearer and/or a radio bearer to be established for the UE.

According to an embodiment, the transceiver 110 is configured to receive a configuration message comprising, or in association with, one of the following configuration messages: a radio bearer setup request; a modify request; a context setup request; or a handover request.

According to an embodiment the transceiver 110 is configured to receive a configuration message as a result of a request sent from the UE or from the transceiver to the transmitting network node 200, requesting configuration information. The request may be sent directly to the transmitting network node 200 or via one or more other network nodes, such as a base station over an X2 interface, an MME over an S1-MME interface or a SGSN over an Iu or Gb interface or any other similar network node.

Referring back to Fig. 4, the processor circuit 120 is configured to determine if caching is enabled, or disabled, for a radio bearer for the UE based on the caching indicator in the received configuration message. The processor circuit 120 may be a separate functional entity e.g. a CPU, or functionality comprised in other parts of the receiving network node 100.

The control circuit 130 is configured to control caching of information for the radio bearer for the UE based on a result from the determination. The control circuit 130 may be configured to control the caching of information for the radio bearer for the UE by enabling or disabling caching from an internal storage and/or from an external storage for that radio bearer.

Fig. 5 is a flowchart depicting examples of embodiments of a method in the transmitting network node 200. The method in the transmitting network node 200 is for enabling a receiving network node 100 of controlling caching of information in a wireless communications network 1 comprising the receiving network node 100 and the transmitting network node 200. The receiving network node 100 being capable of serving, on one or more radio bearers, one or more UEs 2 located in the wireless communications network 1. The method comprises a step of creating **S50** a configuration message including a caching indicator associated with a radio bearer for a UE and indicating whether caching is enabled or disabled for that radio bearer. The creating S50 of a configuration message may be based on a request received **S40** from another network node, for example the receiving network node 100, requesting configuration information. The receiving S40 step is illustrated by dashed lines in the figure since it is optional in combination with any other embodiments of the method. The creating S50 may further comprise creating a configuration message including a caching indicator associated with an established radio bearer and/or a radio bearer to be established for the UE.

According to further embodiments, the creating S50 of a configuration message comprises creating one of the following configuration messages or creating the configuration message in association with one of the following messages: a radio bearer setup request; a radio bearer modify request; a UE context setup request; or a handover request.

Referring back to Fig. 5, the method further comprises transmitting **S60** the created configuration message to the receiving network node 100 enabling the receiving network node 100 to control caching of information for the radio bearer for the UE in the wireless communications network.

Note that the transmitting network node 200 may be a base station similarly as the receiving network node 100. The terms receiving network node and transmitting network node may equally be exchanged to, or seen as, "a first network node" and "a second network node" and may further comprise same functionalities. In one example, both the transmitting network node 200 and the receiving network node 100 are base station, e.g. eNodeBs, and the interface between them is X2 interface on which the configuration message is transmitted S60.

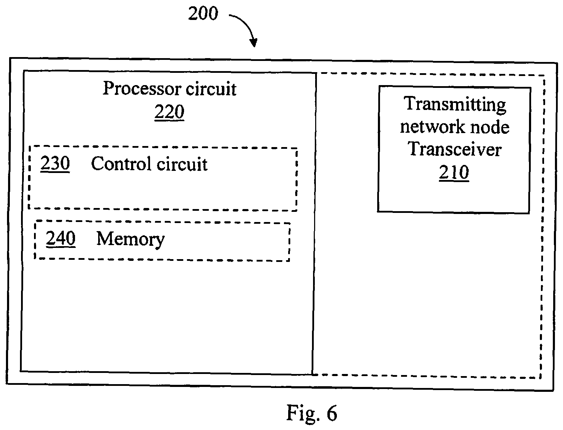

**Fig. 6** is a schematic block diagram illustrating an example of an embodiment of a transmitting network node. According to the figure, the transmitting network node 200 is for enabling a receiving network node 100 of controlling caching of information in a wireless communications network 1 comprising the receiving network node 100 and the transmitting network node 200. The receiving network node 100 is capable of serving, on one or more radio bearers, one or more UEs 2 located in the wireless communications network **1.** The transmitting network node 200 comprises a processor circuit **220** and a transmitting network node transceiver **210,** and other parts not illustrated in the figure for reason of simplicity. For example the transmitting network node **200** may comprise a control circuit **230** and a memory **240,** which may located in or part of the processor circuit or separate functional units and are therefore illustrated in dashed lines in Fig. 6.

The processor circuit 220 is configured to create, which may be in response to a request from another network node, a configuration message including a caching indicator associated with a radio bearer for a UE and indicating whether caching is enabled or disabled for that radio bearer. The configuration message may include an indicator associated with an established radio bearer and/or a radio bearer to be established for the UE. The configuration message may be created to comprise, or created in association with, one of the following configuration messages: a radio bearer setup request; a radio bearer modify request; a UE context setup request; or a handover request.

The transmitting network node transceiver 210 is configured to transmit the created configuration message to the receiving network node 100 enabling the receiving network node 100 to control caching of information for the radio bearer for the UE in the wireless communications network 1. The transmitting network node transceiver 210 may be configured to transmit the configuration message via another network node, directly to the receiving network node 100 or via a base station over an X2 interface. The transmitting network node may be any of: an MME; a RNC; a radio base station; a SGSN; an O&M node or an eNodeB of an LTE or enhanced LTE (eLTE) system.

### EXAMPLE 1:

Following is a first illustration of an implementation of some of the herein disclosed embodiments in relation to an Evolved Universal Terrestrial Radio Access Network (E-UTRAN) system and Evolved Packet Core (EPC) which is the IP-based core network defined by 3GPP for use by LTE and other access technologies.

According to this illustration an Evolved Packet System (EPS) bearer is used in the E-UTRAN/EPC to provide communication possibilities for the UEs and is realized by the following elements:
- A radio bearer transporting packets of an EPS bearer between a UE and an eNodeB. If a radio bearer exists, there is a one-to-one mapping between an EPS bearer and this radio bearer.
- An S1 bearer transports packets of an EPS bearer between an eNodeB and a Serving GW.
- An E-RAB (E-UTRAN Radio Access Bearer) refers to a concatenation of an S1 bearer and a corresponding radio bearer.
- An S5/S8 bearer transports packets of an EPS bearer between a Serving GW and a Packet Data Network Gateway (PDN GW). The PDN GW is a node providing connectivity from the UE to external packet data networks by being the point of exit and entry of traffic for the UE

According to this illustration, the caching allowed indication, i.e. the caching indicator indicating whether caching is allowed or not, is provided on the EPS bearer level for the EPC/E-UTRAN case.

A UE needs to register with the wireless communications network to receive services that require registration. This registration is in many cases referred to as Network Attachment procedure. The always-on IP connectivity for the UE of the EPS is enabled by establishing a default EPS bearer during Network Attachment. This means that a so called default EPS bearer is established already during the so called "Network Attachment" procedure and that a caching indicator may also be indicated for this radio bearer. In this case no separate procedure, like PDP context establishment, is needed and the UE has connectivity using this radio bearer whenever it is attached to the wireless communications network. The Policy and Charging Control (PCC) rules applied to a default EPS bearer may be predefined in the PDN GW and activated in an attachment by the PDN GW itself. The Attachment procedure may trigger one or multiple Dedicated Bearer Establishment procedures to establish dedicated EPS bearer(s) for that UE.

Initial Attachment (i.e. so called "Network Attachment") procedure and the Dedicated Bearer establishment/activation procedure are disclosed in Technical Specifications 3GPP TS 23.401 and 3GPP TS 36, 413.

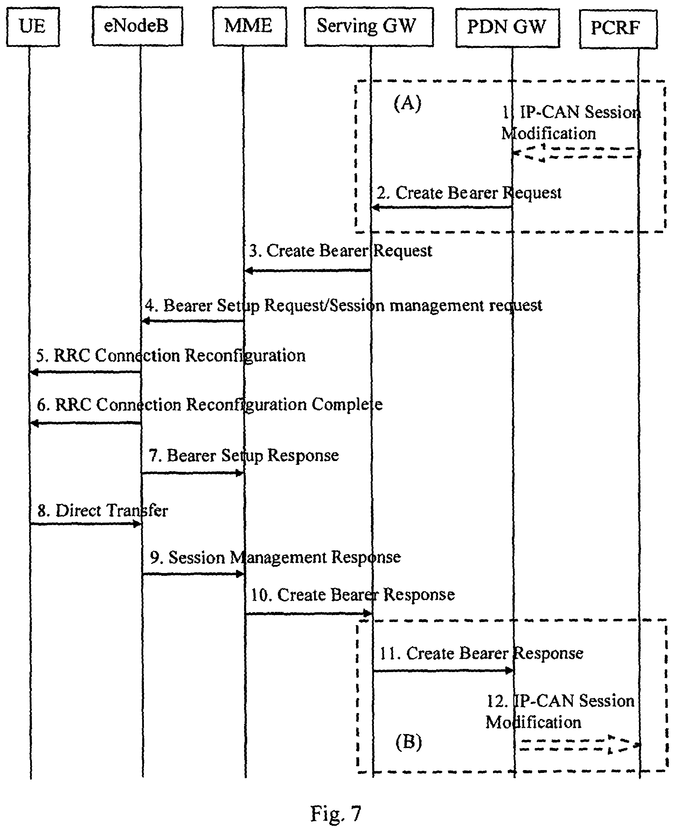

The different steps here would be that the MME may send to the eNB information about how the default EPS bearer is to be established. This "INITIAL CONTEXT SETUP REQUEST" message would contain a new "RAN Caching Allowed" indicator that defines whether RAN caching is allowed for traffic on the default bearer, or not. An example of this is illustrated in Fig. 7 for the "E-RAB SETUP REQUEST" message. There are different variants of implementation here depending on if the RAN cache is co-located within the eNB (eNodeB) or not i.e. within the RAN or core network but not part of the eNB. If the RAN cache is co-located with the eNB, then the eNB may take local actions to not use the cache of information for traffic related to this default bearer. If the RAN cache is not co-located with the eNB, then the eNB can take actions to not link in the RAN cache for traffic related to this default bearer. In this case the initial source for the "RAN Caching Allowed" indicator can be any of the nodes in the core network i.e. HSS/HLR, PCRF, PDN-GW, SGW or MME.

In Fig. 7, the most interesting step is step 4 where the message sent is the S1AP Bearer Setup Request defined in 3GPP Technical Specification (TS) 36.413 as "E-RAB SETUP REQUEST") and shown as "Bearer Setup Request".

Also in this case the initial source for the "RAN Caching Allowed" indicator can be any of the nodes in the core network i.e. Home Subscriber Server (HSS)/ Home Location Register (HLR), Policy and Charging Rules Function (PCRF), PDN-GW, SGW or MME.

Fig. 7 will not be further explained since many of the steps in the figure may be found in the specification and are not further discussed in purpose of simplicity.

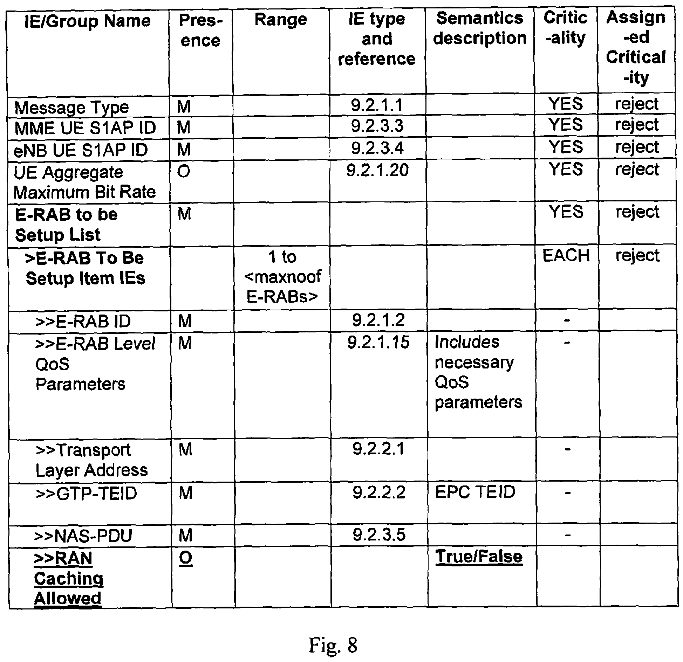

**Fig. 8** shows current message definition for the message implementation illustrated in relation to Fig. 7 and which relates to section 9.1.3.1 of 3GPP TS 36.413. In the "IE/Group Name" (last section) field a new section indicating RAN Caching Allowed is introduced here to indicate whether caching is allowed or not for a certain bearer for a UE. The purpose of the different headings like Presence, Range, IE Type and reference and etc. are defined in 3GPP specification and may be considered as known to a person skilled in the art. The main purpose here is to define how a receiving side should treat different information elements (IE), for example if an IE is mandatory or optional, and what is an allowed value range for the IE.

The same principle as described above applies also for other S1AP messages like in a Bearer Modification procedure i.e. a similar addition may be made for "E-RAB MODIFY REQUEST" message. Also applicable procedures are different Context Management procedures like "INITIAL CONTEXT SETUP REQUEST" message, and handover related procedures like "HANDOVER REQUEST" message.

In addition, same principle may also be applied for different X2AP messages between eNodeBs. An example is the X2AP handover related messages like X2AP HANDOVER REQUEST that also contains the *E-RABs To Be Setup List* IE/Group shown in figure 8. The RAN caching allowed indicator can in a similar way be included in the X2AP messages.

### EXAMPLE 2:

Following is a second illustration of an implementation of some of the herein disclosed embodiments in relation to a Wideband Code Division Multiple Access (WCDMA)/ High Speed Packet Access (HSPA) system i.e. UTRAN implementation/case.

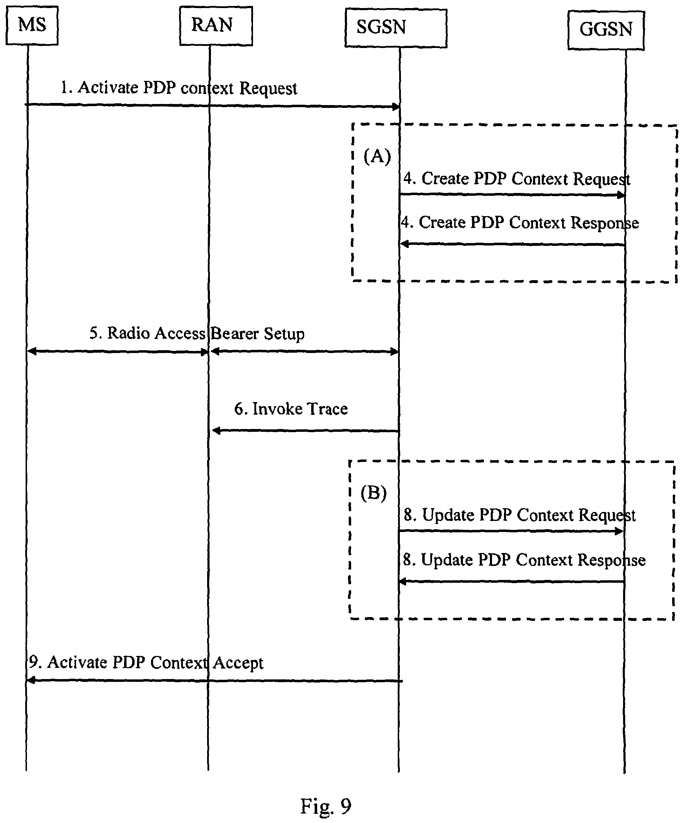

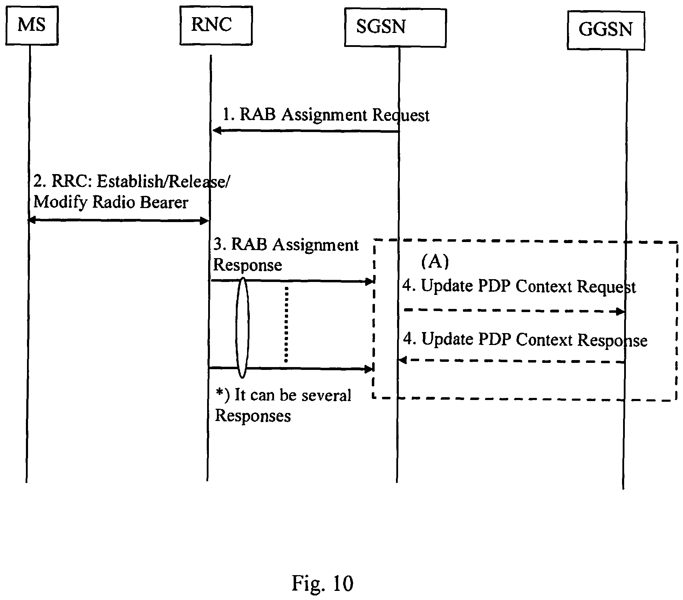

For the WCDMA/HSPA case a similar principle applies and is described in relation to **Fig. 9** (that is figure 64 from 3GPP TS 23.060). In this case the connectivity is provided by a PDP context, and the figure 9 shows the exemplary case for how an MS/UE can activate a PDP context. Fig. 9 which illustrates PDP context activation procedure for Iu mode and only the parts relevant for implementation with any of the herein disclosed embodiments will be described in the following disclosure.
1) The MS sends an "Activate PDP Context Request" message to a SGSN. The MS may use Access Point Name (APN) to select a reference point to a certain packet data network and/or to select a service. Access Point Name is a logical name referring to the packet data network and/or to a service that a subscriber wishes to connect to.
4) The SGSN validates the "Activate PDP Context Request" using information like the APN provided by the MS and PDP context subscription records. The SGSN selects a GGSN for this PDP context. The SGSN sends a "Create PDP Context Request message" to the affected GGSN.
   The GGSN creates a new entry in its PDP context table and returns a Create PDP Context Response message to the SGSN.
   These steps are all included in a first box called (A) and is dashed mark to indicate that the exact details of these steps depend on the interface used between SGSN and GGSN.
   Fig. 8 will not be further explained since many of the steps in the figure may be found in the specification and are not further discussed in purpose of simplicity.
5) A Radio Access Bearer (RAB) setup is done by the RAB Assignment procedure and this is further shown in **Fig. 10** (that is figure 90a from 3GPP TS 23.060). The remaining steps shown in Fig. 9 are not important for the implementation of the embodiments disclosed herein.

Fig. 10 illustrates the RAB assignment procedure mentioned above. Most important part of ) Fig 10 is step 1, "RAB Assignment Request" (that is defined in 3GPP TS 25.413) sent from the SGSN to a Radio Network Controller (RNC). This message has a container "RABs To Be Setup Or Modified List" and in the same way as described for E-RABs in the E-RAB SETUP REQUEST message for LTE/SAE (EXAMPLE 1). The "RAN Caching Allowed" indicator is now included for each RAB in the container list.

There are different variants of this example not shown in the figure depending on if the RAN cache is co-located with or within the RNC or not. If the RAN cache is co-located with the RNC, then the RNC may take local actions to not use the cache for traffic related to this bearer. If the RAN cache is not co-located with the RNC, then the RNC may take actions to not link in the RAN cache for traffic related to this bearer.

Also in this case the initial source for the "RAN Caching Allowed" indicator may be any of the nodes in the core network i.e. HSS/HLR, PCRF, PDN-GW, SGW, SGSN or GGSN.

Further, it is to be noted that some of the described circuits/circuitries 110-130, 210-240 comprised within the receiving network node 100 (BS1) or the transmitting network node 200 (BS2) are to be regarded as separate logical entities but not with necessity separate physical entities.

The methods in Fig. 2, Fig. 3 and Fig. 5 for use in a network node (100, 200) may further be implemented through one or more processor circuits/circuitries 110-130 and 210-240 together with computer program code for performing the functions of the present method(s). Thus a computer program product, comprising instructions for performing the method(s) may assist, when the computer program product is loaded into or run in the network node (100, 200). The computer program product mentioned above may be provided for instance in the form of a data carrier carrying computer program code for performing the method(s). The data carrier may be e.g. a hard disk, a CD ROM disc, a memory stick, an optical storage device, a magnetic storage device or any other appropriate medium such as a disk or tape that can hold machine readable data. The computer program code can furthermore be provided as program code on a server or in a (radio) network node and downloadable to the network node (100, 200) remotely, e.g. over an Internet or an intranet connection.

When using the formulation "comprise" or "comprising" it is to be interpreted as nonlimiting, i.e. meaning "consist at least of'. The present invention is not limited to the above described preferred embodiments. The term configured to may be equally exchangeable with being adapted to and is considered to have the same meaning. Various alternatives, modifications and equivalents may be used. Therefore, the above embodiments are not to be taken as limiting the scope of the present invention, which is defined by the appending claims.

## Claims

1. A method in a receiving network node (100) for controlling caching of information in a wireless communications network (1) comprising the receiving network node (100) and a transmitting network node (200), wherein the method comprises:
- receiving (S10) a configuration message, from the transmitting network node (200), the configuration message including a caching indicator associated with a radio bearer for a user equipment, UE, (2);
- receiving (S20') a UE context;
- determining (S20) if the caching of information is enabled, or disabled, for the radio bearer for the UE (2) based on both the caching indicator in the received configuration message and the received UE context; and
- in response to determining (S20) that the caching of information is enabled, enabling (S30a) the caching of information for the radio bearer for the UE (2) from an internal storage, of the receiving network node (100), on the radio bearer.

2. The method according to the preceding claim, wherein the caching indicator is associated with an established radio bearer and/or a radio bearer to be established for the UE (2).

3. The method according to any of the preceding claims, wherein the receiving (S10) the configuration message comprises receiving a configuration message in association with one of the following: a radio bearer setup request; a radio bearer modify request; a UE context setup request; or a handover request.

4. The method according to any of the preceding claims, wherein the receiving (S10) the configuration message is based on a request sent (S10a) to the transmitting network node (200) requesting configuration information and receiving (S10b) the configuration message in response to the request sent (S10a).

5. The method according to any of the preceding claims, wherein the receiving (S10) comprises receiving a configuration message from, or via, a base station over an X2 interface.

6. The method according to any of claims 1 to 4, wherein the receiving (S10) comprises receiving a configuration message from a Mobility Management Entity, MME, over an S1-MME interface.

7. The method according to any of claims 1 to 4, wherein the receiving (S10) comprises receiving a configuration message from a Serving General Packet Radio Service Support Node, SGSN, over an Iu or a Gb interface.

8. A receiving network node (100) for controlling caching of information in a wireless communications network (1) comprising the receiving network node (100) and a transmitting network node (200), wherein the receiving network node (100) comprises:
- a transceiver (110) configured to receive a configuration message, from the transmitting network node (200), the configuration message including a caching indicator associated with a radio bearer for a user equipment, UE, (2), wherein the transceiver (110) is further configured to receive a UE context;
- a processor circuit (120) configured to determine if the caching of information is enabled, or disabled, for the radio bearer for the UE (2) based on both the caching indicator in the received configuration message and the received UE context; and
- a control circuit configured, in response to the determination, by the processing circuit (120), that the caching of information is enabled, to enable the caching of information for the radio bearer for the UE (2) from an internal storage, of the receiving network node (100), on the radio bearer.

9. The receiving network node (100) according to the preceding claim, wherein the caching indicator is associated with an established radio bearer and/or a radio bearer to be established for the UE (2).

10. The receiving network node (100) according to any of claims 8 or 9, wherein the transceiver (110) is configured to receive a configuration message comprising one of the following configuration messages: a radio bearer setup request; a radio bearer modify request; a UE context setup request; or a handover request.

11. The receiving network node (100) according to any of claims 8 to 10, wherein the transceiver (110) is configured to receive a configuration message as a result of a request sent from the transceiver (110) to the transmitting network node (200), requesting configuration information.

12. The receiving network node (100) according to any of claims 8 to 10, wherein the transceiver (110) is configured to receive a configuration message from, or via, a base station over an X2 interface.

13. The receiving network node (100) according to any of claims 8 to 11, wherein the transceiver (110) is configured to receive a configuration message from a Mobility Management Entity, MME, over an S1-MME interface.

14. A method in a wireless communications network (1) for controlling caching of information, the wireless communications network (1) comprising a receiving network node (100) and a transmitting network node (200), wherein the method comprises:
- creating (S50), by the transmitting network node (200), a configuration message including a caching indicator associated with a radio bearer for a user equipment, UE, (2) and indicating whether the caching of information is enabled or disabled for that radio bearer;
- transmitting (S60), by the transmitting network node (200), the created configuration message to the receiving network node (100), enabling the receiving network node (100) to enable or disable the caching of information for the radio bearer for the UE (2) in the wireless communications network (1);
- receiving (S10), by the receiving network node (100), the created configuration message, from the transmitting network node (200);
- receiving (S20'), by the receiving network node (100), a UE context;
- determining (S20), by the receiving network node (100), if the caching of information is enabled, or disabled, for the radio bearer for the UE (2) based on both the caching indicator in the received configuration message and the received UE context; and
- in response to determining (S20) that the caching of information is enabled, enabling (S30a) by the receiving network node, the caching of information for the radio bearer for the UE (2) from an internal storage, of the receiving network node (100), on the radio bearer.

15. A wireless communications network (1) for controlling caching of information, the wireless communications network (1) comprising:
- a transmitting network node (200), the transmitting network node (200) comprising:
- a processor circuit (220) configured to create a configuration message including a caching indicator associated with a radio bearer for a user equipment, UE, (2) and indicating whether the caching of information is enabled or disabled for the radio bearer; and
- a transmitting network node transceiver (210) configured to transmit the created configuration message to a receiving network node (100), enabling the receiving network node (100) to enable or disable the caching of information for the radio bearer for the UE (2) in the wireless communications network (1); and
- the receiving network node (100), the receiving network node (100) comprising:
- a transceiver (110) configured to receive the created configuration message, from the transmitting network node (200), wherein the transceiver (110) is further configured to receive a UE context;
- a processor circuit (120) configured to determine if the caching of information is enabled, or disabled, for the radio bearer for the UE (2) based on both the caching indicator in the received configuration message and the received UE context; and
- a control circuit configured, in response to the determination, by the processing circuit (120), that the caching of information is enabled, to enable the caching of information for the radio bearer for the UE (2) from an internal storage, of the receiving network node (100), on the radio bearer.

## Patentansprüche

1. Verfahren in einem Empfangsnetzwerkknoten (100) zum Steuern von Caching von Informationen in einem drahtlosen Kommunikationsnetz (1), das den Empfangsnetzwerkknoten (100) und einen Sendenetzwerkknoten (200) umfasst, wobei das Verfahren Folgendes umfasst:
- Empfangen (S10) einer Konfigurationsnachricht von dem Sendenetzwerkknoten (200), wobei die Konfigurationsnachricht einen Caching-Indikator beinhaltet, der mit einem Funkträger für ein Benutzergerät (UE) (2) assoziiert ist;
- Empfangen (S20') eines UE-Kontextes;
- Bestimmen (S20), basierend sowohl auf dem Caching-Indikator in der empfangenen Konfigurationsnachricht als auch dem empfangenen UE-Kontext, ob das Caching von Informationen für den Funkträger für das UE (2) aktiviert oder deaktiviert ist; und
- als Reaktion auf das Bestimmen (S20), dass das Caching von Informationen aktiviert ist, Ermöglichen (S30a) des Cachings von Informationen für den Funkträger für das UE (2) von einem internen Speicher des Empfangsnetzwerkknotens (100) auf dem Funkträger.

2. Verfahren nach dem vorstehenden Anspruch, wobei der Caching-Indikator mit einem eingerichteten Funkträger und/oder einem Funkträger, der für das UE (2) eingerichtet werden soll, assoziiert ist.

3. Verfahren nach einem der vorstehenden Ansprüche, wobei das Empfangen (S10) der Konfigurationsnachricht das Empfangen einer Konfigurationsnachricht im Zusammenhang mit einem des Folgenden umfasst: einer Funkträger-Einstellungsanforderung; einer Funkträger-Modifizierungsanforderung; einer UE-Kontext-Einstellungsanforderung oder einer Übergabeanforderung.

4. Verfahren nach einem der vorstehenden Ansprüche, wobei das Empfangen (S10) der Konfigurationsnachricht auf einer Anforderung, die an den Sendenetzwerkknoten (200) gesendet (S10a) wurde und Konfigurationsinformationen anfordert, und dem Empfangen (S10b) der Konfigurationsnachricht als Reaktion auf die gesendete (S10a) Anforderung basiert.

5. Verfahren nach einem der vorstehenden Ansprüche, wobei das Empfangen (S10) das Empfangen einer Konfigurationsnachricht von oder mittels einer Basisstation über eine X2-Schnittstelle umfasst.

6. Verfahren nach einem der Ansprüche 1 bis 4, wobei das Empfangen (S10) das Empfangen einer Konfigurationsnachricht von einer Mobilitätsverwaltungseinheit (MME) über eine S1-MME-Schnittstelle umfasst.

7. Verfahren nach einem der Ansprüche 1 bis 4, wobei das Empfangen (S10) das Empfangen einer Konfigurationsnachricht von einem bedienenden Unterstützungsknoten des allgemeinen Paketfunkdienstes (SGSN) über eine Iu- oder eine Gb-Schnittstelle umfasst.

8. Empfangsnetzwerknoten (100) zum Steuern von Caching von Informationen in einem drahtlosen Kommunikationsnetz (1), das den Empfangsnetzwerkknoten (100) und einen Sendenetzwerkknoten (200) umfasst, wobei der Empfangsnetzwerknoten (100) Folgendes umfasst:
- einen Sendeempfänger (110), der dazu konfiguriert ist, eine Konfigurationsnachricht von dem Sendenetzwerkknoten (200) zu empfangen, wobei die Konfigurationsnachricht einen Caching-Indikator beinhaltet, der mit einem Funkträger für ein Benutzergerät (UE) (2) assoziiert ist, wobei der Sendeempfänger (110) ferner dazu konfiguriert ist, einen UE-Kontext zu empfangen;
- einen Prozessorschaltkreis (120), der dazu konfiguriert ist, basierend sowohl auf dem Caching-Indikator in der empfangenen Konfigurationsnachricht als auch dem empfangenen UE-Kontext zu bestimmen, ob das Caching von Informationen für den Funkträger für das UE (2) aktiviert oder deaktiviert ist; und
- einen Steuerschaltkreis, der dazu konfiguriert ist, als Reaktion auf die Bestimmung durch den Prozessorschaltkreis (120), dass das Caching von Informationen aktiviert ist, das Caching von Informationen für den Funkträger für das UE (2) von einem internen Speicher des Empfangsnetzwerkknotens (100) auf dem Funkträger zu ermöglichen.

9. Empfangsnetzwerknoten (100) nach dem vorstehenden Anspruch, wobei der Caching-Indikator mit einem eingerichteten Funkträger und/oder einem Funkträger, der für das UE (2) eingerichtet werden soll, assoziiert ist.

10. Empfangsnetzwerknoten (100) nach einem der Ansprüche 8 oder 9, wobei der Sendeempfänger (110) dazu konfiguriert ist, eine Konfigurationsnachricht zu empfangen, die eine der folgenden Konfigurationsnachrichten umfasst: eine Funkträger-Einstellungsanforderung; eine Funkträger-Modifizierungsanforderung; eine UE-Kontext-Einstellungsanforderung oder eine Übergabeanforderung.

11. Empfangsnetzwerknoten (100) nach einem der Ansprüche 8 bis 10, wobei der Sendeempfänger (110) dazu konfiguriert ist, eine Konfigurationsnachricht als ein Ergebnis einer Anforderung zu empfangen, die von dem Sendeempfänger (110) an den Sendenetzwerkknoten (200) gesendet wurde und Konfigurationsinformationen anfordert.

12. Empfangsnetzwerknoten (100) nach einem der Ansprüche 8 bis 10, wobei der Sendeempfänger (110) dazu konfiguriert ist, eine Konfigurationsnachricht von oder mittels einer Basisstation über eine X2-Schnittstelle zu empfangen.

13. Empfangsnetzwerknoten (100) nach einem der Ansprüche 8 bis 11, wobei der Sendeempfänger (110) dazu konfiguriert ist, eine Konfigurationsnachricht von einer Mobilitätsverwaltungseinheit (MME) über eine S1-MME-Schnittstelle zu empfangen.

14. Verfahren in einem drahtlosen Kommunikationsnetz (1) zum Steuern von Caching von Informationen, wobei das drahtlose Kommunikationsnetz (1) einen Empfangsnetzwerkknoten (100) und einen Sendenetzwerkknoten (200) umfasst, wobei das Verfahren Folgendes umfasst:
- Erzeugen (S50), durch den Sendenetzwerkknoten (200), einer Konfigurationsnachricht, die einen Caching-Indikator beinhaltet, der mit einem Funkträger für ein Benutzergerät (UE) (2) assoziiert ist und angibt, ob das Caching von Informationen für diesen Funkträger aktiviert oder deaktiviert ist;
- Übertragen (S60), durch den Sendenetzwerkknoten (200), der erzeugten Konfigurationsnachricht an den Empfangsnetzwerkknoten (100), was dem Empfangsnetzwerkknoten (100) ermöglicht, das Caching von Informationen für den Funkträger für das UE (2) in dem drahtlosen Kommunikationsnetz (1) zu aktivieren oder zu deaktivieren;
- Empfangen (S10), durch den Empfangsnetzwerkknoten (100), der erzeugten Konfigurationsnachricht von dem Sendenetzwerkknoten (200);
- Empfangen (20'), durch den Empfangsnetzwerkknoten (100), eines UE-Kontextes;
- Bestimmen (S20), durch den Empfangsnetzwerkknoten (100), basierend sowohl auf dem Caching-Indikator in der empfangenen Konfigurationsnachricht als auch dem empfangenen UE-Kontext, ob das Caching von Informationen für den Funkträger für das UE (2) aktiviert oder deaktiviert ist; und
- als Reaktion auf das Bestimmen (S20), dass das Caching von Informationen aktiviert ist, Ermöglichen (S30a), durch den Empfangsnetzwerkknoten, des Cachings von Informationen für den Funkträger für das UE (2) von einem internen Speicher des Empfangsnetzwerkknoten (100) auf dem Funkträger.

15. Drahtloses Kommunikationsnetz (1) zum Steuern von Caching von Informationen, wobei das drahtlose Kommunikationsnetz (1) Folgendes umfasst:
- einen Sendenetzwerkknoten (200), wobei der Sendenetzwerkknoten (200) Folgendes umfasst:
- einen Prozessorschaltkreis (220), der dazu konfiguriert ist, eine Konfigurationsnachricht zu erzeugen, die einen Caching-Indikator beinhaltet, der mit einem Funkträger für ein Benutzergerät (UE) (2) assoziiert ist und angibt, ob das Caching von Informationen für den Funkträger aktiviert oder deaktiviert ist; und
- einen Sendeempfänger (210) des Sendenetzwerkknotens, der dazu konfiguriert ist, die erzeugte Konfigurationsnachricht an einen Empfangsnetzwerkknoten (100) zu übertragen, was dem Empfangsnetzwerkknoten (100) ermöglicht, das Caching von Informationen für den Funkträger für das UE (2) in dem drahtlosen Kommunikationsnetz (1) zu aktivieren oder zu deaktivieren; und
- den Empfangsnetzwerkknoten (100), wobei der Empfangsnetzwerkknoten (100) Folgendes umfasst:
- einen Sendeempfänger (110), der dazu konfiguriert ist, die erzeugte Konfigurationsnachricht von dem Sendenetzwerkknoten (200) zu empfangen, wobei der Sendeempfänger (110) ferner dazu konfiguriert ist, einen UE-Kontext zu empfangen;
- einen Prozessorschaltkreis (120), der dazu konfiguriert ist, basierend sowohl auf dem Caching-Indikator in der empfangenen Konfigurationsnachricht als auch dem empfangenen UE-Kontext zu bestimmen, ob das Caching von Informationen für den Funkträger für das UE (2) aktiviert oder deaktiviert ist; und
- einen Steuerschaltkreis, der dazu konfiguriert ist, als Reaktion auf die Bestimmung durch den Prozessorschaltkreis (120), dass das Caching von Informationen aktiviert ist, das Caching von Informationen für den Funkträger für das UE (2) von einem internen Speicher des Empfangsnetzwerkknotens (100) auf dem Funkträger zu ermöglichen.

## Revendications

1. Procédé dans un nœud de réseau de réception (100) pour commander une mise en cache d'informations dans un réseau de télécommunication sans fil (1) comprenant le nœud de réseau de réception (100) et un nœud de réseau de transmission (200), dans lequel le procédé comprend :
- la réception (S10) d'un message de configuration, en provenance du nœud de réseau de transmission (200), le message de configuration incluant un indicateur de mise en cache associé à une porteuse radio pour un équipement d'utilisateur, UE, (2) ;
- la réception (S20') d'un contexte d'UE ;
- la détermination (S20) si la mise en cache d'informations est activée, ou désactivée, pour la porteuse radio pour l'UE (2) sur la base à la fois de l'indicateur de mise en cache dans le message de configuration reçu et du contexte d'UE reçu ; et
- en réponse à la détermination (S20) que la mise en cache d'informations est activée, l'activation (S30a) de la mise en cache d'informations pour la porteuse radio pour l'UE (2) à partir d'un stockage interne, du nœud de réseau de réception (100), sur la porteuse radio.

2. Procédé selon la revendication précédente, dans lequel l'indicateur de mise en cache est associé à une porteuse radio établie et/ou une porteuse radio à établir pour l'UE (2).

3. Procédé selon l'une quelconque des revendications précédentes, dans lequel la réception (S10) du message de configuration comprend la réception d'un message de configuration en association avec l'une des suivantes : une demande de configuration de porteuse radio ; une demande de modification de porteuse radio ; une demande de configuration de contexte d'UE ; ou une demande de transfert.

4. Procédé selon l'une quelconque des revendications précédentes, dans lequel la réception (S10) du message de configuration est basée sur une demande envoyée (S10a) au nœud de réseau de transmission (200) demandant des informations de configuration et la réception (S10b) du message de configuration en réponse à la demande envoyée (S10a).

5. Procédé selon l'une quelconque des revendications précédentes, dans lequel la réception (S10) comprend la réception d'un message de configuration en provenance de, ou via, une station de base sur une interface X2.

6. Procédé selon l'une quelconque des revendications 1 à 4, dans lequel la réception (S10) comprend la réception d'un message de configuration en provenance d'une entité de gestion de mobilité, MME, sur une interface S1-MME.

7. Procédé selon l'une quelconque des revendications 1 à 4, dans lequel la réception (S10) comprend la réception d'un message de configuration à partir d'un nœud de support GPRS de service, SGSN, sur une interface Iu ou Gb.

8. Nœud de réseau de réception (100) pour commander la mise en cache d'informations dans un réseau de télécommunication sans fil (1) comprenant le nœud de réseau de réception (100) et un nœud de réseau de transmission (200), dans lequel le nœud de réseau de réception (100) comprend :
- un émetteur-récepteur (110) configuré pour recevoir un message de configuration, en provenance du nœud de réseau de transmission (200), le message de configuration incluant un indicateur de mise en cache associé à une porteuse radio pour un équipement d'utilisateur, UE, (2), dan lequel l'émetteur-récepteur (110) est en outre configuré pour recevoir un contexte d'UE ;
- un circuit de processeur (120) configuré pour déterminer si la mise en cache d'informations est activée, ou désactivée, pour la porteuse radio pour l'UE (2) sur la base à la fois de l'indicateur de mise en cache dans le message de configuration reçu et du contexte d'UE reçu ; et
- un circuit de commande configuré, en réponse à la détermination, par le circuit de traitement (120), que la mise en cache d'informations est activée, pour activer la mise en cache d'informations pour la porteuse radio pour l'UE (2) en provenance d'un stockage interne, du nœud de réseau de réception (100), sur la porteuse radio.

9. Nœud de réseau de réception (100) selon la revendication précédente, dans lequel l'indicateur de mise en cache est associé à une porteuse radio établie et/ou à une porteuse radio à établir pour l'UE (2).

10. Nœud de réseau de réception (100) selon l'une quelconque des revendications 8 ou 9, dans lequel l'émetteur-récepteur (110) est configuré pour recevoir un message de configuration comprenant l'un des messages de configuration suivants : une demande de configuration de porteuse radio ; une demande de modification de porteuse radio ; une demande de configuration de contexte d'UE ; ou une demande de transfert.

11. Nœud de réseau de réception (100) selon l'une quelconque des revendications 8 à 10, dans lequel l'émetteur-récepteur (110) est configuré pour recevoir un message de configuration suite à une demande envoyée de l'émetteur-récepteur (110) au nœud de réseau de transmission (200), transmettant des informations de configuration.

12. Nœud de réseau de réception (100) selon l'une quelconque des revendications 8 à 10, dans lequel l'émetteur-récepteur (110) est configuré pour recevoir un message de configuration en provenance de, ou via, une station de base sur une interface X2.

13. Nœud de réseau de réception (100) selon l'une quelconque des revendications 8 à 11, dans lequel l'émetteur-récepteur (110) est configuré pour recevoir un message de configuration en provenance d'une entité de gestion de mobilité, MME, sur une interface S1-MME.

14. Procédé dans un réseau de télécommunication sans fil (1) pour commander la mise en cache d'informations, le réseau de télécommunication sans fil (1) comprenant un nœud de réseau de réception (100) et un nœud de réseau de transmission (200), dans lequel le procédé comprend :
- la création (S50), par le nœud de réseau de transmission (200), d'un message de configuration incluant un indicateur de mise en cache associé à une porteuse radio pour un équipement d'utilisateur, UE, (2) et indiquant si la mise en cache d'informations est activée ou désactivée pour cette porteuse radio ;
- la transmission (S60), par le nœud de réseau de transmission (200), du message de configuration créé au nœud de réseau de réception (100), permettant au nœud de réseau de réception (100) d'activer ou de désactiver la mise en cache d'informations pour la porteuse radio pour l'UE (2) dans le réseau de télécommunication sans fil (1) ;
- la réception (S10), par le nœud de réseau de réception (100), du message de configuration créé, en provenance du nœud de réseau de transmission (200) ;
- la réception (S20'), par le nœud de réseau de réception (100), d'un contexte d'UE ;
- la détermination (S20), par le nœud de réseau de réception (100), si la mise en cache d'informations est activée, ou désactivée, pour la porteuse radio pour l'UE (2) sur la base à la fois de l'indicateur de mise en cache dans le message de configuration reçu et du contexte d'UE reçu ; et
- en réponse à la détermination (S20) que la mise en cache d'informations est activée, l'activation (S30a) par le nœud de réseau de réception, des informations de mise en cache pour la porteuse radio pour l'UE (2) en provenance d'un stockage interne, du nœud de réseau de réception (100), sur la porteuse radio.

15. Réseau de télécommunication sans fil (1) pour commander une mise en cache d'informations, le réseau de télécommunication sans fil (1) comprenant :
- un nœud de réseau de transmission (200), le nœud de réseau de transmission (200) comprenant :
- un circuit de processeur (220) configuré pour créer un message de configuration incluant un indicateur de mise en cache associé à une porteuse radio pour un équipement d'utilisateur, UE, (2) et indiquant si la mise en cache d'informations est activée ou désactivée pour la porteuse radio ; et
- un émetteur-récepteur de nœud de réseau de transmission (210) configuré pour transmettre le message de configuration créé à un nœud de réseau de réception (100), permettant au nœud de réseau de réception (100) d'activer ou de désactiver la mise en cache d'informations pour la porteuse radio pour l'UE (2) dans le réseau de télécommunication sans fil (1) ; et
- le nœud de réseau de réception (100), le nœud de réseau de réception (100) comprenant :
- un émetteur-récepteur (110) configuré pour recevoir le message de configuration créé, en provenance du nœud de réseau de transmission (200), dans lequel l'émetteur-récepteur (110) est en outre configuré pour recevoir un contexte d'UE ;
- un circuit de processeur (120) configuré pour déterminer si la mise en cache d'informations est activée, ou désactivée, pour la porteuse radio pour l'UE (2) sur la base à la fois de l'indicateur de mise en cache dans le message de configuration reçu et du contexte d'UE reçu ; et
- un circuit de commande configuré, en réponse à la détermination, par le circuit de traitement (120), que la mise en cache d'informations est activée, pour activer la mise en cache d'informations pour la porteuse radio pour l'UE (2) en provenance d'un stockage interne, du nœud de réseau de réception (100), sur la porteuse radio.
